# EUROPÄISCHE PATENTANMELDUNG

(11) **EP 4 015 547 A1**
(43) Veröffentlichungstag der Anmeldung: **22.06.2022**
(21) Anmeldenummer: 20214012.5
(22) Anmeldetag: 15.12.2020
(51) Int. Cl.: C08G 18/02, C08G 18/10, C08G 18/28, C08G 18/70, C08G 18/73, C08G 18/78, C08G 18/79, C09D 175/04, C08G 18/22

(54) **NICHTIONISCH HYDROPHILIERTE POLYISOCYANATE, KATALYSE MIT ZINK-KOMPLEXEN**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die Erfindung betrifft ein Verfahren zur Herstellung hydrophil modifizierter Polyisocyanate, die nach diesem Verfahren erhältlichen oder erhaltenen Polyisocyanate und die Verwendung dieser zur Herstellung von Polyurethankunststoffen. Weiter betrifft die Erfindung Beschichtungsmittel enthaltend die hydrophil modifizierten Polyisocyanate sowie die mit diesen Beschichtungsmitteln beschichteten Substrate.

## Beschreibung

Die Erfindung betrifft ein Verfahren zur Herstellung hydrophil modifizierter Polyisocyanate, die nach diesem Verfahren erhältlichen oder erhaltenen Polyisocyanate und die Verwendung dieser zur Herstellung von Polyurethankunststoffen. Außerdem betrifft die Erfindung Beschichtungsmittel enthaltend die hydrophil modifizierten Polyisocyanate sowie die mit diesen Beschichtungsmitteln beschichteten Substrate.

Wässrige Lacksysteme haben sich heute für verschiedene Anwendungsbereiche als umweltfreundliche Alternative zu lösemittelhaltigen Beschichtungsmitteln fest etabliert. Eine besondere Rolle als Rohstoff für qualitativ hochwertige wässrige Lacke spielen dabei hydrophil-modifizierte Polyisocyanate, da sie als wasserdispergierbare Vernetzerkomponenten die Formulierung wässriger Zweikomponenten-Polyurethan (2K-PUR)-Lacke ermöglichen. Polyisocyanate mit Iminooxadiazindionstruktur, die sich durch außerordentlich niedrige Viskositäten auszeichnen, eignen sich hervorragend als Ausgangskomponente zur Herstellung hydrophiler Polyisocyanate, die völlig lösemittelfrei eingesetzt werden können.

Eine einfache und preiswerte Methode zur Herstellung wasserdispergierbarer Polyisocyanate ist die anteilige Umsetzung hydrophober Polyisocyanate mit hydrophilen Polyetheralkoholen (siehe z. B. EP-A 0 959 087, Seite 2, Zeilen 25 - 46). Im technischen Maßstab wird diese Umsetzung üblicherweise bei Temperaturen von ca. 80 bis 130 °C durchgeführt, um wirtschaftlich akzeptable Reaktionszeiten zu gewährleisten.

Bei der Hydrophilierung von Iminooxadiazindion-Polyisocyanaten, die in der Regel in untergeordneter Menge immer auch Uretdionstrukturen enthalten, macht sich in diesem Temperaturbereich allerdings die Thermolabilität der Uretdione nachteilig bemerkbar. Diese führt aufgrund der einsetzenden Uretdionspaltung zu einem deutlichen Anstieg des Gehalts an monomeren Diisocyanaten, die bekanntermaßen ein akut toxisches Potential aufweisen.

Als geeignete Katalysatoren zur Beschleunigung der Reaktion zwischen hydrophilen Polyetheralkoholen und Polyisocyanaten wurden bisher insbesondere Zinn-Verbindungen, wie z. B. Dibutylzinndilaurat (DBTL), Dimethylzinndilaurat, Dimethylzinndineodecanoat, Dibutylzinnacetat, Zinn(II)-octoat, Dibutylzinnoxid und Dimethylzinndichlorid, oder Amine, wie z. B. 1,4-Diazabicyclo[2,2,2]octan (DABCO) beschrieben (z. B. WO 1995/31492, EP-A 516 277). Während aminische Katalysatoren, wie DABCO, aber selbst bei niedrigen Temperaturen die Rückspaltung von Uretdiongruppen in Isocyanatgruppen katalysieren und damit zu einem Monomeranstieg im Polyisocyanat führen, wird die Verwendung von Zinnverbindungen, insbesondere Organozinnverbindungen wie DBTL, als Katalysatoren für Polyurethananwendungen heute aufgrund ihres toxikologische Profils zunehmend kritisch diskutiert.

In den letzten Jahren wurde eine Vielzahl zinnfreier Katalysatoren, insbesondere solche auf Basis von Zink, Zirkonium oder Bismuth als Alternativen für die in der Polyurethanchemie weit verbreiteten Zinn-Katalysatoren, wie DBTL, vorgeschlagen (z. B.: W. J. Blank, Macromol. Symp. 187, 261 - 270 (2002); Y. Schellekens et al., Green Chem., 2014, 16, 4401 - 4407).

Wie eigene Versuche zeigten, setzen bei der Umsetzung von Polyisocyanaten mit hydrophilen Polyetheralkoholen in Gegenwart üblicher Zirkonkatalysatoren selbst bei niedrigen Temperaturen von 50 bis 60 °C allerdings unerwünschte Nebenreaktionen ein, wie z. B. Trimerisierung zu Isocyanuratstrukturen, verbunden mit NCO-Verlust und Viskositätsaufbau. Einige solcher Katalysatoren führen darüberhinaus ebenfalls zur Spaltung von Uretdiongruppen und einem Anstieg der Gehalte an monomeren Diisocyanaten.

Die häufig als DBTL-Ersatz empfohlenen Bi-Katalysatoren katalysieren zwar wie gewünscht die Urethanisierungsreaktion zwischen Polyisocyanat und Polyetheralkohol, zeigen sich aber mit Iminooxadiazinstrukturen derart unverträglich, dass ausschließlich trübe Reaktionsprodukte erhalten werden.

Bisher sind keine Organozinn-freien Katalysatoren bekannt, die die Polyetherhydrophilierung Iminooxadiazin- und Uretdionstrukturen enthaltender Polyisocyanate bei niedrigen Temperaturen ermöglichen, ohne dass es in merklichem Umfang zu den genannten unerwünschten Nebenreaktionen oder Trübungen im Produkt kommt.

Aufgabe der vorliegenden Erfindung war daher es, ein neues Verfahren zur Herstellung nichtionisch hydrophilierter, Iminooxadiazindion- und Uretdionstrukturen enthaltender Polyisocyanate zur Verfügung zu stellen, das bei niedrigen Reaktionstemperaturen innerhalb kurzer Reaktionszeiten farblose und trübungsfreie Produkte mit sehr niedrigen Gehalten an monomeren Diisocyanaten liefert.

Diese Aufgabe konnte jetzt mit dem nachfolgend näher beschriebenen Verfahren gelöst werden. Die vorliegende Erfindung beruht auf der überraschenden Beobachtung, dass die Umsetzung von Polyisocyanaten, die Iminooxadiazindion- und Uretdionstrukturen aufweisen, mit hydrophilen Polyetheralkoholen in Gegenwart spezieller Zink-Komplexe als Katalysator völlig glatt zu niedrigviskosen, transparenten Reaktionsprodukten führt, ohne dass Uretdionspaltung und Monomeranstieg oder sonstige Nebenreaktionen zu beobachten wären.

Gegenstand der vorliegenden Erfindung ist ein Verfahren zur Herstellung hydrophil modifizierter Polyisocyanate, umfassend eine Umsetzung von
A) mindestens einer Polyisocyanatkomponente, die mindestens Iminooxadiazindion- und Uretdionstrukturen aufweist, mit
B) mindestens einer nichtionisch hydrophilen organischen Verbindung, die mindestens eine gegenüber Isocyanaten reaktive Gruppe aufweist, und gegebenenfalls
C) mindestens einer hydrophoben Verbindungen, die mindestens eine gegenüber Isocyanaten reaktive Gruppe aufweist, in Gegenwart
D) mindestens eines durch Umsetzung von Zink(II)carboxylaten mit Amidinbasen erhältlichen Zink(II)-Amidin-Komplexes der allgemeinen Formel (I)

   [Zn(Amidin)₂(Carboxylat)₂] (I)

   als Katalysator.

Gegenstand der Erfindung sind auch die hydrophil modifizierten Polyisocyanate sowie ihre Verwendung als Ausgangskomponenten bei der Herstellung von Polyurethankunststoffen, insbesondere als Vernetzer für wasserlösliche oder -dispergierbare Lackbindemittel oder Lackbindemittelkomponenten mit gegenüber Isocyanatgruppen reaktionsfähigen Gruppen bei der Herstellung von Überzügen unter Verwendung von wässrigen Beschichtungsmitteln auf Basis derartiger Bindemittel oder Bindemittelkomponenten.

Bevorzugt bedeuten erfindungsgemäß die Ausdrücke "umfassend" oder "enthaltend", "im Wesentlichen bestehend aus" und besonders bevorzugt "bestehend aus". Die in den Patentansprüchen und in der Beschreibung genannten weiteren Ausführungsformen können beliebig kombiniert werden, sofern sich aus dem Kontext nicht eindeutig das Gegenteil ergibt.

"Mindestens ein", wie hierin verwendet, bezieht sich auf 1 oder mehr, beispielsweise 2, 3, 4, 5, 6, 7, 8, 9 oder mehr. Im Zusammenhang mit Bestandteilen der hierin beschriebenen Verbindungen bezieht sich diese Angabe nicht auf die absolute Menge an Molekülen, sondern auf die Art des Bestandteils. "Mindestens einer Polyisocyanatkomponente" bedeutet daher beispielsweise, dass nur eine Art von Polyisocyanatkomponente oder mehrere verschiedene Arten von Polyisocyanatkomponenten, ohne Angaben über die Menge der einzelnen Verbindungen zu machen, enthalten sein können.

Zahlenwerte, die hierin ohne Dezimalstellen angegeben sind, beziehen sich jeweils auf den vollen angegebenen Wert mit einer Dezimalstelle. So steht beispielsweise "99%" für "99,0%".

Numerische Bereiche, die in dem Format "in/von x bis y" angegeben sind, schließen die genannten Werte ein. Wenn mehrere bevorzugte numerische Bereiche in diesem Format angegeben sind, ist es selbstverständlich, dass alle Bereiche, die durch die Kombination der verschiedenen Endpunkte entstehen, ebenfalls erfasst werden.

Vorliegend ist der Begriff "aliphatisch" definiert als nicht-aromatische Kohlenwasserstoffgruppen, die gesättigt oder ungesättigt sind.

Vorliegend ist der Begriff "araliphatisch" definiert als Kohlenwasserstoffreste, die sowohl aus einer aromatischen als auch aus einer gesättigten oder ungesättigten Kohlenwasserstoffgruppe bestehen, die direkt an den aromatischen Rest gebunden ist.

Vorliegend ist der Begriff "alicyclisch" oder "cycloaliphatisch" definiert als gegebenenfalls substituierte, carbocyclische oder heterocyclische Verbindungen oder Einheiten, die nicht aromatisch sind (wie z.B. Cycloalkane, Cycloalkene oder Oxa-, Thia-, Aza- oder Thiazacycloalkane). Besondere Beispiele sind Cyclohexylgruppen, Cyclopentylgruppen und ihre N- oder O-heterocyclischen Derivate wie z.B. Pyrimidin, Pyrazin, Tetrahydropyran oder Tetrahydrofuran.

Für den Fall, dass die Gruppen oder Verbindungen als "gegebenenfalls substituiert" oder "substituiert" offenbart werden, sind geeignete Substituenten -F, -Cl, -Br, -I, -OH, - OCH₃, -OCH₂CH₃, -O-Isopropyl oder -O-n-Propyl, -OCF₃, -CF₃, -S-C₁₋₆-Alkyl und/oder (gegebenenfalls über ein angehängtes Heteroatom) eine lineare oder verzweigte, aliphatische und/oder alicyclische Struktureinheit mit 1 bis 12 Kohlenstoffatomen, die jeweils als Ersatz für ein kohlenstoffgebundenes Wasserstoffatom des betreffenden Moleküls fungiert. Bevorzugte Substituenten sind Halogen (insbesondere -F, -Cl), C₁₋₆-Alkoxy (insbesondere Methoxy und Ethoxy), Hydroxy, Trifluormethyl und Trifluormethoxy, die jeweils als Ersatz für ein an Kohlenstoff gebundenes Wasserstoffatom des betreffenden Moleküls fungieren.

Geeignete Polyisocyanate A) für das erfindungsgemäße Verfahren sind beliebige, durch Modifizierung einfacher aliphatischer, cycloaliphatischer, araliphatischer und/oder aromatischer Diisocyanate hergestellte Polyisocyanate, die mindestens Iminooxadiazindion- und Uretdionstrukturen aufweisen.

Geeignete Diisocyanate zur Herstellung der Polyisocyanate A) können auf verschiedene Weise, beispielsweise durch Phosgenierung der korrespondierenden Diamine in der Flüssig- oder Gasphase oder auf phosgenfreien Weg, wie z. B. durch thermische Urethanspaltung, erhalten werden. Bevorzugte Diisocyanate sind solche des Molekulargewichtsbereichs 140 bis 400 mit aliphatisch, cycloaliphatisch, araliphatisch und/oder aromatisch gebundenen Isocyanatgruppen, wie z. B. 1,4-Diisocyanatobutan, 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 2,4'- und 4,4'-Diisocyanatodicyclohexylmethan, 1-Isocyanato-1-methyl-4(3)isocyanatomethylcyclohexan, Bis-(isocyanatomethyl)-norbornan, 1,3- und 1,4-Bis-(2-isocyanato-prop-2-yl)-benzol (TMXDI), 2,4- und 2,6-Diisocyanatotoluol (TDI), 2,4'- und 4,4'-Diisocyanatodiphenylmethan (MDI), 1,5-Diisocyanatonaphthalin oder Mischungen aus mindestens zwei solcher Diisocyanate.

Neben Iminooxadiazindion- und Uretdionstrukturen können die beim erfindungsgemäßen Verfahren eingesetzten Polyisocyanate A) gegebenenfalls zusätzlich auch Isocyanurat-, Allophanat-, Biuret-, Urethan- und/oder Oxadiazintrionstrukturen aufweisen.

Die Herstellung der Polyisocyanate A) erfolgt nach an sich bekannten Methoden, wie sie beispielsweise in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP-A 0 339 396, EP-A 0 798 299, EP-A 0 986 009, EP-A 0 962 454, EP-A 0 962 455, EP-A 2 785 760, EP-A 2 883 895, EP-A 3 107 922, EP-A 3 107 948 und EP-A 3 337 836 beispielhaft beschrieben sind.

Bei der Herstellung dieser Polyisocyanate A) schließt sich an die eigentliche Modifizierungsreaktion in der Regel ein weiterer Verfahrenschritt zur Abtrennung der nicht umgesetzten überschüssigen monomeren Diisocyanate an. Diese Monomerenabtrennung erfolgt nach an sich bekannten Verfahren vorzugsweise durch Dünnschichtdestillation im Vakuum oder durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan.

Bevorzugt kommen beim erfindungsgemäßen Verfahren Polyisocyanate A) zum Einsatz, die einen Gehalt an monomeren Diisocyanaten von weniger als 1 Gew.-%, vorzugsweise weniger als 0,5 Gew.-%, besonders bevorzugt von weniger als 0,3 Gew.-% und ganz besonders bevorzugt von weniger als 0,25 Gew.-% aufweisen. Die Gehalte an monomeren Diisocyanaten werden nach DIN EN ISO 10283:2007-11 gaschromatographisch mit internem Standard bestimmt.

In den Polyisocyanaten A) beträgt der Gehalt an Iminooxadiazindionstrukturen bevorzugt mindestens 8 mol-%, besonders bevorzugt von 10 bis 70 mol-%, ganz besonders bevorzugt von 20 bis 60 mol-%, und der Gehalt an Uretdionstrukturen bevorzugt mindestens 1 mol-%, bevorzugt mindestens 3 mol-%, ganz besonders bevorzugt von 5 bis 60 mol-% und am stärksten bevorzugt von 5 bis 30 mol-%, jeweils bezogen auf die Gesamtmenge aller im Polyisocyanat vorliegenden Iminooxadiazindion-, Uretdion-, gegebenenfalls Isocyanurat-, Allophanat-, Biuret-, Urethan- und/oder Oxadiazintrionstrukturen.

Die Gehalte (mol-%) der in den Polyisocyanaten A) vorliegenden Iminooxadiazindion-, Uretdion-, gegebenenfalls Isocyanurat-, Allophanat-, Biuret-, Urethan- und/oder Oxadiazintrionstrukturen werden aus den Integralen protonenentkoppelter ¹³C-NMR-Spektren (aufgenommen an einem Gerät Bruker DPX-400) errechnet und beziehen sich jeweils auf die Summe an vorliegenden Uretdion-, Isocyanurat-, Allophanat-, Biuret-, Iminooxadiazindion- und/oder Oxadiazintrionstrukturen. Im Falle von in CDCl₃ gelösten HDI-Polyisocyanaten weisen die einzelnen Strukturelemente folgende chemische Verschiebungen (in ppm) auf: Iminooxadiazindion: 147.8, 144.3 und 135.3; Uretdion: 157.1; Isocyanurat: 148.4; Allophanat: 155.7 und 153.8, Biuret: 155,5; Urethan: 156,3; Oxadiazintrion: 147,8 und 143,9.

Geeignete Polyisocyanate A) sind auch beliebige Mischungen aus mindestens zwei Polyisocyanaten der genannten Art, wobei in diesen Mischungen auch solche Polyisocyanate zum Einsatz gelangen können, die völlig frei von Iminooxadiazindion- und Uretdionstrukturen sind, oder auch solche, die entweder nur Iminooxadiazindionstrukturen oder nur Uretdionstrukturen aufweisen, sofern die Mischungen den vorstehend für die Polyisocyanate A) gemachten Angaben bezüglich der Gehalte an Iminooxadiazindion- und Uretdionstrukturen entsprechen.

Bevorzugte Polyisocyanate A) sind solche der genannten Art, die neben Iminooxadiazindion- und Uretdionstrukturen zusätzlich Isocyanuratstrukturen enthalten.

Besonders bevorzugte Polyisocyanate A) für das erfindungsgemäße Verfahren sind solche der genannten Art mit ausschließlich aliphatisch und/oder cycloaliphatisch gebundenen Isocyanatgruppen.

Ganz besonders bevorzugte Polyisocyanate A) sind solche auf Basis von PDI, HDI, IPDI und/oder 2,4'- und 4,4'-Diisocyanatodicyclohexylmethan.

Die vorstehend als geeignet, bevorzugt, besonders bevorzugt und ganz besonders bevorzugt genannten Polyisocyanate A) enthalten Iminooxadiazindion- und Uretdionstrukturen und gegebenenfalls vorzugsweise Isocyanuratstrukturen und weisen eine mittlere NCO-Funktionalität von 2,3 bis 5,0, vorzugsweise von 2,5 bis 4,5, sowie einen Gehalt an Isocyanatgruppen von 6,0 bis 26,0 Gew.-%, vorzugsweise von 8,0 bis 25,0 Gew.-%, besonders bevorzugt 10,0 bis 24,0 Gew.-% auf.

Ausgangsverbindungen B) für das erfindungsgemäße Verfahren sind beliebige nichtionisch hydrophile organische Verbindung, die mindestens eine gegenüber Isocyanaten reaktive Gruppe aufweisen. Geeignete Ausgangsverbindungen B) sind beispielsweise ein- oder mehrwertige, im statistischen Mittel 5 bis 50 Ethylenoxideinheiten pro Molekül aufweisende Polyalkylenoxidpolyetheralkohole, wie sie in an sich bekannter Weise durch Alkoxylierung geeigneter Startermoleküle zugänglich sind (siehe z. B. Ullmanns Encyclopädie der technischen Chemie, 4. Auflage, Band 19, Verlag Chemie, Weinheim S. 31 - 38). Solche Startermoleküle können beispielsweise beliebige ein- oder mehrwertige Alkohole des Molekulargewichtsbereiches 32 bis 300 sein, wie z. B. Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole, Hydroxymethylcyclohexan, 3-Methyl-3-hydroxymethyloxetan, Benzylalkohol, Phenol, die isomeren Kresole, Octylphenole, Nonylphenole und Naphthole, Furfurylalkohol, Tetrahydrofurfurylalkohol, 1,2-Ethandiol, 1,2- und 1,3-Propandiol, die isomeren Butandiole, Pentandiole, Hexandiole, Heptandiole und Octandiole, 1,2- und 1,4-Cyclohexandiol, 1,4-Cyclohexandimethanol, 4,4'-(1-Methylethyliden)-biscyclohexanol, 1,2,3-Propantriol, 1,1,1-Trimethylolethan, 1,2,6-Hexantriol, 1,1,1-Trimethylolpropan, 2,2-Bis(hydroxymethyl)-1,3-propandiol oder 1,3,5-Tris(2-hydroxyethyl)isocyanurat.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können. Geeignete Polyetheralkohole sind entweder reine Polyethylenoxidpolyetheralkohole oder gemischte Polyalkylenoxidpolyether, deren Alkylenoxideinheiten zu mindestens 70 mol-%, vorzugsweise zu mindestens 80 mol-% aus Ethylenoxideinheiten bestehen.

Bevorzugte Polyalkylenoxidpolyetheralkohole B) sind solche, die unter Verwendung der oben genannten Monoalkohole des Molekulargewichtsbereiches 32 bis 150 als Startermoleküle hergestellt wurden. Besonders bevorzugte Polyetheralkohole sind reine Polyethylenglycolmonomethyletheralkohole, die im statistischen Mittel 5 bis 50, ganz besonders bevorzugt 5 bis 25 Ethylenoxideinheiten aufweisen.

Nichtionisch hydrophile Verbindungen B) kommen beim erfindungsgemäßen Verfahren in Mengen von bis zu 30 Gew.-%, vorzugsweise von 2 bis zu 25 Gew.-%, besonders bevorzugt von 5 bis zu 20 Gew.-%, bezogen auf die Gesamtmenge der Ausgangskomponenten A), B) und gegebenenfalls C) zum Einsatz.

Ausgangsverbindungen C) für das erfindungsgemäße Verfahren sind beliebige hydrophobe Verbindungen, wie zum Beispiel aliphatische Alkohole oder Fettsäureesteralkohole mit jeweils mindestens 8 Kohlenstoffatomen.

Geeignete aliphatische hydrophobe Alkohole C) sind beispielweise 1-Octanol, 2-Ethyl-1-hexanol, die isomeren Nonanole, Decanole, Undecanole, Dodecanole, Tridecanole, Tetradecanole, Pentadecanole, Hexadecanole und 3-Phenyl-2-propenol (Zimtalkohol) sowie auf diesen Alkoholen gestartete hydrophobe Polyalkylenoxidalkohole, deren Alkylenoxideinheiten zu mindestens 80 mol-%, vorzugsweise mindestens 90 mol-%, besonders bevorzugt ausschließlich aus Propylenoxideinheiten bestehen.

Geeignete Fettsäureesteralkohole C) sind beispielsweise Veresterungsprodukte hydroxyfunktioneller Fettsäuren, wie z. B. Hydroxyessigsäure, 3-Hydroxypropionsäure, Hydroxybuttersäure, 2-Hydroxybernsteinsäure (Äpfelsäure), 2,3-Dihydroxybernsteinsäure (Weinsäure), 2-Hydroxy-1,2,3-propan-tricarbonsäure (Citronensäure), Hydroxystearinsäure, Ricinolsäure, Salicylsäure und Mandelsäure, mit Alkoholen, wie z. B. Methanol, Ethanol, n-Propanol, Isopropanol, n-Butanol, Isobutanol, sec-Butanol, den isomeren Pentanolen, Hexanolen, Octanolen und Nonanolen, n-Decanol oder n-Dodecanol, bei denen die Summe der Kohlenstoffatome von Fettsäure und Veresterungsalkohol mindestens 8 beträgt.

Hydrophobe Verbindungen C) kommen, falls überhaupt, beim erfindungsgemäßen Verfahren in Mengen von bis zu 30 Gew.-%, vorzugsweise von 2 bis zu 20 Gew.-%, besonders bevorzugt von 3 bis zu 10 Gew.-%, bezogen auf die Gesamtmenge der Ausgangskomponenten A), B) und gegebenenfalls C) zum Einsatz.

Die Umsetzung der Polyisocyanate A) mit den nichtionisch hydrophilen Verbindungen B) und gegebenenfall hydrophoben Verbindungen C) erfolgt beim erfindungsgemäßen Verfahren in Gegenwart mindestens eines durch Umsetzung von Zink(II)carboxylaten mit Amidinbasen erhältlichen Zink(II)-Amidin-Komplexes der allgemeinen Formel (I)

[Zn(Amidin)₂(Carboxylat)₂] (I)

als Katalysator.

Derartige Zink(II)-Amidin-Komplexe D) sowie Verfahren zu ihrer Herstellung sind bekannt und beispielsweise in WO 2006/022899, WO 2012/126796 oder EP-A 2 877 515 beschrieben.

Geeignete Zink(II)carboxylate zur Herstellung der Zink(II)-Amidin-Komplexe der allgemeinen Formel (I) sind beispielsweise Zinksalze gesättigter oder ungesättigter, aliphatischer, cycloaliphatischer und/oder aromatischer Carbonsäuren mit bis zu 30 Kohlenstoffatomen, vorzugsweise 2 bis 18 Kohlenstoffatomen, besonders bevorzugt 2 bis 12 Kohlenstoffatomen, ganz besonders bevorzugt 2 bis 10 Kohlenstoffatomen, die gegebenenfalls, beispielsweise durch Halogenatome, weiter substituiert sein können.

Vorzugsweise handelt es sich bei den zur Herstellung der Zink-amidin-Komplexe geeigneten Zink(II)carboxylate um Zinksalze linearer oder verzweigter aliphatischer Carbonsäuren mit bis zu 18 Kohlenstoffatomen, wie z. B. Ameisensäure, Essigsäure, Trifluoressigsäure, Propionsäure, Buttersäure, Pentansäuren, Hexansäure, Heptansäure, Octansäure, Nonansäure, Decansäure, Dodecansäure, Myristinsäure, Palmitinsäure, Stearinsäure oder deren Isomere, wie z. B. 2-Ethylhexansäure oder Neodecansäure.

Bevorzugte Zink(II)carboxylate zur Herstellung der Zink-amidin-Komplexe D) sind Essigsäure, 2-Ethylhexansäure oder Neodecansäure.

Geeignete Amidinbasen zur Herstellung der Zink-amidin-Komplexe D) der allgemeinen Formel (I) sind beispielsweise solche der allgemeinen Formel (II) 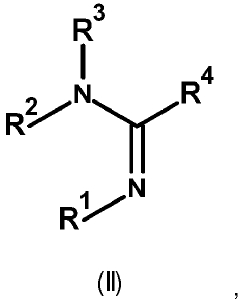 in welcher die Reste
- R¹ bis R⁴: unabhängig voneinander für gleiche oder verschiedene Reste stehen, die Wasserstoff, gesättigte oder ungesättigte, lineare oder verzweigte, aliphatische, cycloaliphatische, araliphatische oder aromatische organische Reste mit 1 bis 18, vorzugsweise 1 bis 12 Kohlenstoffatomen, die substituiert oder unsubstituiert sind und/oder Heteroatome in der Kette aufweisen, stehen, wobei die Reste auch in Kombination untereinander gegebenenfalls gemeinsam mit einem weiteren Heteroatom Ringe mit 3 bis 12 Kohlenstoffatomen bilden können, die gegebenenfalls weiter substituiert sein können, und wobei
- R⁴: auch die Bedeutung eines Restes 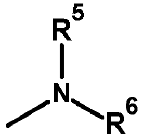 haben kann, in dem die Reste R⁵ und R⁶ die vorstehend für die Reste R¹ bis R⁴ genannte Bedeutung haben können.

Als geeignete Amidinbasen der allgemeinen Formel (II) seien beispielhaft genannt, N,N,N'-Trimethylformamidin, N'-Cyclohexyl-N,N-dimethylformamidin, N'-Decyl-N,N-dimethylformamidin, N'-Dodecyl-N,N-dimethylformamidin, N'-Octadecyl-N,N-dimethylformamidin, N'-Phenyl-N,N-dimethylformamidin, N'-Cyclohexyl-N,N-acetamidin, N'-Methyl-N,N-di-n-butylacetamidin, N'-Cyclohexyl-N,N-dimethylvaleramidin, 1,1,3,3-Tetramethylguanidin, 1,3-Diphenylguanidin, 2-tert-Butyl-1,1,3,3-tetramethylguanidin, 1-Methylcyclohexyliminopyrrolidin, N-(α-(Decyliminoethyl)ethyl)pyrrolidin, 3-Butyl-3,4,5,6-tetrahydropyrimidin, 1,2-Dimethyl-1,4,5,6-tetrahydropyrimidin oder N-(Hexyliminomethyl)morpholin.

Bevorzugte Amidinbasen der allgemeinen Formel (II) sind solche, in welcher die Reste
- R¹ bis R⁴: für gesättigte aliphatische organische Reste stehen, wobei die Reste R¹ und R² in Kombination untereinander einen Ring mit 3 bis 5 Kohlenstoffatomen und die Reste R³ und R⁴ in Kombination untereinander einen Ring mit 4 bis 12 Kohlenstoffatomen bilden können.

Bevorzugte Amidinbasen sind somit bicyclische, N,N,N'-trisubstituierte Amidine der allgemeinen Formel (III) 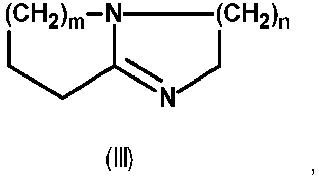 in welcher m für eine ganze Zahl von 1 bis 9, vorzugsweise von 1 bis 3, und n für eine ganze Zahl von 1 bis 3, vorzugsweise für 2, steht.

Als Beispiele für Amidinbasen der allgemeine Formel (III) seien hier genannt 1,4-Diazabicyclo[3.3.0]oct-4-en, 1,5-Diazabicyclo[4.3.0]non-5-en (DBN), 1,8-Diazabicyclo[5.4.0]undec-7-en (DBU) und 1,9-Diazabicyclo[6.5.0]tridec-8-en.

Besonders bevorzugte Amidinbasen der allgemeine Formel (III) sind 1,5-Diazabicyclo[4.3.0]non-5-en (DBN) und 1,8-Diazabicyclo[5.4.0]undec-7-en (DBU).

Geeignete Amidinbasen zur Herstellung der Zink-amidin-Komplexe D) der allgemeinen Formel (I) sind schließlich auch solche der allgemeinen Formel (IV). 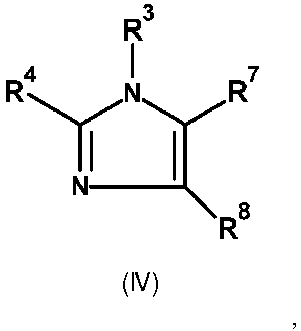 in welcher die Reste
- R³, R⁴, R⁷ und R⁸: die oben für R³ und R⁴ in der allgemeinen Formel (II) angegebene Bedeutung haben, wobei die Reste auch in Kombination untereinander gegebenenfalls gemeinsam mit einem weiteren Heteroatom Ringe mit 2 bis 8 Kohlenstoffatomen bilden können, die gegebenenfalls weiter substituiert sein können.

Bei diesen Amidinbasen handelt es sich um Imidazol sowie beliebig substituierte Imidazolderivate, wie z. B. 1-Methylimidazol (N-Methylimidazol), 1-Ethylimidazol, 1-Propylimidazol, 1-Butylimidazol, 1-Phenylimidazol, 1,1-Methylen-bis-imidazol, 1,2-Dimethylimidazol, 1-(Hydroxyethyl)imidazol, N-(3-Aminopropyl)imidazol, 4-(Hydroxymethyl)imidazol, 1-(Ethoxycarbonyl)imidazol und 1-(tert-Butoxycarbonyl)imidazol.

Bevorzugte Amidinbasen vom Imidazoltyp zur Herstellung der Zink-amidin-Komplexe D) sind 1-Methylimidazol, 1-Ethylimidazol und 1,2-Dimethylimidazol.

Beim erfindungsgemäßen Verfahren bevorzugt als Katalysator eingesetzte Zink(II)-Amidin-Komplexes D) sind Umsetzungsprodukte von Zink(II)carboxylaten der genannten Art mit den vorstehend genannten Guanidinen, bicylischen N,N,N'-trisubstituierten Amidinen der allgemeinen Formel (III) und Imidazolen der allgemeinen Formel (IV), wie z. B. Zn(1,1,3,3-Tetramethylguanidin)₂(formiat)₂, Zn(1,1,3,3-Tetramethylguanidin)₂(acetat)₂, Zn(1,1,3,3-Tetramethylguanidin)₂(2-ethylhexanoat)₂, Zn(1,1,3,3-Tetramethylguanidin)₂(octoat)₂, Zn(1,1,3,3-Tetramethylguanidin)₂(neodecanoat)₂, Zn(1,1,3,3-Tetramethylguanidin)₂(benzoat)₂, Zn(1,3-Diphenylguanidin)₂(formiat)₂, Zn(1,3-Diphenylguanidin)₂(acetat)₂, Zn(1,3-Diphenylguanidin)₂(2-ethylhexanoat)₂, Zn(1,3-Diphenylguanidin)₂(octoat)₂, Zn(1,3-Diphenylguanidin)₂(neodecanoat)₂, Zn(1,3-Diphenylguanidin)₂(benzoat)₂, Zn(DBN)₂(formiat)₂, Zn(DBN)₂(acetat)₂, Zn(DBN)₂(2-ethylhexanoat)₂, Zn(DBN)₂(octoat)₂, Zn(DBN)₂(neodecanoat)₂, Zn(DBN)₂(benzoat)₂, Zn(DBU)₂(formiat)₂, Zn(DBU)₂(acetat)₂, Zn(DBU)₂(2-ethylhexanoat)₂, Zn(DBU)₂(octoat)₂, Zn(DBU)₂(neodecanoat)₂, Zn(DBU)₂(benzoat)₂, Zn(1-Methylimidazol)₂(formiat)₂, Zn(1-Methylimidazol)₂(acetat)₂, Zn(1-Methylimidazol)₂(2-ethylhexanoat)₂, Zn(1-Methylimidazol)₂(octoat)₂, Zn(1-Methylimidazol)₂(neodecanoat)₂, Zn(1-Methylimidazol)₂(benzoat)₂, Zn(1-Ethylimidazol)₂(formiat)₂, Zn(1-Ethylimidazol)₂(acetat)₂, Zn(1-Ethylimidazol)₂(2-ethylhexanoat)₂, Zn(1-Ethylimidazol)₂(octoat)₂, Zn(1-Ethylimidazol)₂(neodecanoat)₂, Zn(1-Ethylimidazol)₂(benzoat)₂, Zn(1,2-Dimethylimidazol)₂(formiat)₂, Zn(1,2-Dimethylimidazol)₂(acetat)₂, Zn(1,2-Dimethylimidazol)₂(2-ethylhexanoat)₂, Zn(1,2-Dimethylimidazol)₂(octoat)₂, Zn(1,2-Dimethylimidazol)₂(neodecanoat)₂ und Zn(1,2-Dimethylimidazol)₂(benzoat)₂.

Besonders bevorzugte Zink(II)-Amidin-Komplexe D) für das erfindungsgemäße Verfahren sind Zn(DBN)₂(2-ethylhexanoat)2, Zn(DBN)₂(neodecanoat)₂, Zn(DBU)₂(2-ethylhexanoat)₂, Zn(DBU)₂(neodecanoat)₂, Zn(1-Methylimidazol)₂(2-ethylhexanoat)₂, Zn(1-Methylimidazol)₂(neodecanoat)₂, Zn(1,2-Dimethylimidazol)₂(2-ethylhexanoat)₂ und Zn(1,2-Dimethylimidazol)₂(neodecanoat)₂.

Die Zink(II)-Amidin-Komplex-Katalysatoren D) kommen beim erfindungsgemäßen Verfahren in vorzugsweise in einer Menge von 0,0005 bis 3 Gew.-%, vorzugsweise von 0,001 bis 2 Gew.-%, besonders bevorzugt von 0,003 bis 1 Gew.-%, bezogen auf das Polyisocyanat A) zum Einsatz.

Beim erfindungsgemäßen Verfahren können gegebenenfalls weitere Hilfs- und Zusatzstoffe, wie z. B. Antioxidantien und/oder Lösemittel zum Einsatz kommen.

Geeignete Antioxidantien sind beispielsweise die aus der Kunststoffchemie an sich bekannten antioxidativ wirkenden Verbindungen, wie z. B. bevorzugt sterisch gehinderte Phenole und/oder di- oder trisubstituierte Phosphite.

Geeignete sterisch gehinderte Phenole sind beispielsweise 2,6-Di-tert-butylphenol, 2,4-Dimethyl-6-tert-butylphenol, 2,6-Di-tert-butyl-4-methylphenol, Triethylenglykol-bis(3-tert-butyl-4-hydroxy-5-methylphenyl)propionat, Octadecyl-3-(3,5-di-tert-butyl-4-hydroxyphenyl) propionat, Pentaerythrit-tetrakis(3-(3,5-di-tert-butyl-4-hydroxy-phenyl)propionat), Ester der 3-(3,5-Di-tert-butyl-4-hydroxyphenyl)propionsäure mit aliphatischen verzweigten C7- bis C9-Alkoholen, wie z. B. Isoheptyl-3-(3,5-di-tert-butyl-4-hydroxyphenyl)propionat, Isooctyl-3-(3,5-di-tert-butyl-4-hydroxyphenyl)propionat oder Isononyl-3-(3,5-di-tert-butyl-4-hydroxyphenylpropionat, Isotridecyl-3-(3,5-di-tert-butyl-4-hydroxyphenyl)propionat, Thiodiethyl-bis[3-(3,5-di-tert-butyl-4-hydroxyphenyl)propionat], N,N'-Hexamethylen-bis(3,5-di-tert-butyl-4-hydroxyphenyl)propionsäureamid, 1,2-Bis(3,5-di-tert-butyl-4-hydroxyphenylpropionsäure)hydrazid, 2,4-Di-tert-butylphenyl-4'-hydroxy-3',5'-di-tert-butylbenzoat, Ester der (3,5-di-tert-butyl-4-hydroxyphenyl)methylthioessigsäure mit aliphatischen verzweigten C10- bis C14-Alkoholen, 2,2'-Thio-bis(4-methyl-6-tert-butylphenol), 2-Methyl-4,6-bis(octylthiomethyl)phenol, 1,3,5-Trimethyl-2,4,6-Tris(3,5-di-tert-butyl-4-hydroxybenzyl)benzol, Tris(3,5-di-tert-butyl-4-hydroxybenzyl)isocyanurat und 2,5-Di-tert-amylhydrochinon, die gegebenenfalls in Kombination mit Didodecyl-3,3'-thiodipropionat oder Dioctadecyl-3,3'-thiodipropionat eingesetzt werden.

Geeignete Phosphite sind beispielsweise di- oder vorzugsweise trisubstituierte Phosphite, wie z. B. Dibutylphosphit und Dibenzylphosphit, Triethylphosphit und Tributylphosphit. Vorzugsweise handelt es sich bei den Antioxidantien vom Phosphit-Typ aber um trisubstituierte Phosphite, bei denen mindestens einer der Substituenten einen gegebenenfalls substituierten aromatischen Rest mit 6 bis 18 Kohlenstoffatomen oder einen linearen oder verzweigten aliphatischen Rest mit 9 bis 18 Kohlenstoffatomen darstellt, beispielsweise um Arylphosphite, wie z. B. Triphenylphosphit, Tris(2,4-di-tert-butylphenyl)phosphit oder Tris(nonylphenyl)phosphit, Alkyl-arylphosphite, wie z. B. Diphenyl-isooctylphosphit, Diphenyl-isodecylphosphit, Diisodecyl-phenylphosphit, Diisooctyl-octylphenylphosphit, Phenyl-neopentylglykolphosphit oder 2,4,6-Tri-tert.-butylphenyl-(2-butyl-2-ethyl-1,3-propandiol)phosphit, Alkylphosphite, wie z. B. Triisodecylphosphit, Trilaurylphosphit oder Tris(tridecyl)phosphit, oder aromatisch bzw. aliphatisch substituierte Diphosphite, wie z. B. Diisodecyl-pentaerythritdiphosphit, Distearylpentaerythritdiphosphit, Bis(2,4-di-tert.-butylphenyl)pentaerythritdiphosphit oder Tetraphenyl-dipropylenglykoldiphosphit.

Bevorzugte Antioxidantien sind sterisch gehinderte Phenole, die 2,6-Di-tert-butyl-4-methylphenol-Strukturen enthalten, sowie trisubstituierte Phosphite, die mindestens einen linearen oder verzweigten aliphatischen Subsituenten mit 10 bis 16 Kohlenstoffatomen oder einen Phenylrest tragen. Besonders bevorzugte Antioxidantien sind 2,6-Di-tert-butyl-4-methylphenol, Ester der 3-(3,5-Di-tert-butyl-4-hydroxyphenyl)propionsäure mit aliphatischen verzweigten C7- bis C9-Alkoholen, Octadecyl-3-(3,5-di-tert-butyl-4-hydroxyphenyl)propionat, Triisodecylphosphit, Phenyldiisodecylphospit und/oder Diphenylisodecylphospit.

Ganz besonders bevorzugte Antioxidantien sind 2,6-Di-tert-butyl-4-methylphenol und Ester der 3-(3,5-Di-tert-butyl-4-hydroxyphenyl)propionsäure mit aliphatischen verzweigten C7-bis C9-Alkoholen.

Falls überhaupt, kommen Antioxidantien beim erfindungsgemäßen Verfahren sowohl einzeln als auch in beliebigen Kombinationen untereinander in Mengen von 0,001 bis 3,0 Gew. %, bevorzugt 0,002 bis 2,0 Gew.-%, besonders bevorzugt von 0,005 bis 1,0 Gew.-%, ganz besonders bevorzugt von 0,01 bis 0,5 Gew.-%, berechnet als Gesamtmenge an eingesetzten Antioxidantien, bezogen auf die Menge an Ausgangspolyisocyanat A), zum Einsatz.

Die Antioxidantien können dabei in der oben angegebenen Menge einem oder mehreren der Reaktionspartner, der Polyisocyanatkomponente A), der nichtionisch hydrophilen organischen Verbindungen B) und/oder der gegebenenfalls mitzuverwendenden hydrophoben Verbindung C) bereits vor Beginn der eigentlichen Umsetzung zugemischt werden. Sie können aber auch zu jedem beliebigen Zeitpunkt während des Zudosierens der Reaktionspartner oder auch im Anschluss daran, vorzugsweise zu Beginn des Zudosierens, dem Reaktionsgemisch zugegeben werden.

Falls überhaupt, werden Antioxidantien bevorzugt vor Beginn der Umsetzung der Polyisocyanatkomponente A) zugesetzt.

Das erfindungsgemäße Verfahren wird vorzugsweise lösemittelfrei durchgeführt. Gegebenenfalls können aber auch geeignete, gegenüber den reaktiven Gruppen der Ausgangskomponenten, insbesondere gegenüber Isocyanatgruppen inerte Lösemittel mitverwendet werden. Geeignete Lösemittel sind beispielsweise die an sich bekannten üblichen Lacklösemittel, wie z. B. Ethylacetat, Butylacetat, Ethylenglykolmonomethyl- oder - ethyletheracetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso^{®}, Isopar^{®}, Nappar^{®} (Deutsche EXXON CHEMICAL GmbH, Köln, DE) und Shellsol^{®} (Deutsche Shell Chemie GmbH, Eschborn, DE) im Handel sind, Kohlensäureester, wie Dimethylcarbonat, Diethylcarbonat, 1,2-Ethylencarbonat und 1,2-Propylencarbonat, Lactone, wie β-Propiolacton, γ-Butyrolacton, ε-Caprolacton und ε-Methylcaprolacton, aber auch Lösemittel wie Propylenglykoldiacetat, Diethylenglykoldimethylether, Dipropylenglykoldimethylether, Butylglykolacetat, Butyldiglykolacetat, 1,3-Dioxolan, N-Methylpyrrolidon und N-Methylcaprolactam, oder beliebige Gemische solcher Lösemittel.

Zur Durchführung des erfindungsgemäßen Verfahrens werden die Ausgangskomponenten A), B) und gegebenenfalls C) in Gegenwart mindestens eines Zink(II)-Amidin-Komplexes D) als Katalysator und gegebenenfalls in Gegenwart weiterer Hilfs- und Zusatzstoffe bei Temperaturen von 20 bis 80 °C, vorzugsweise 30 bis 70 °C, besonders bevorzugt 45 bis 65 °C, unter Einhaltung eines Äquivalent-Verhältnisses von NCO-Gruppen zu gegenüber NCO-Gruppen reaktiven Gruppen von 4 : 1 bis 400 : 1, vorzugsweise von 6 : 1 bis 250 : 1, vorzugsweise bis zum Erreichen des theoretisch errechneten NCO-Gehalts miteinander umgesetzt, wobei der Verlauf der Umsetzung durch z. B. titrimetrische Bestimmung des NCO-Gehaltes verfolgt werden kann. Die Bestimmung des NCO-Gehaltes erfolgt vorzugsweise titrimetrisch nach DIN EN ISO 11909:2007-05.

Nach Erreichen des theoretisch errechneten NCO-Gehaltes kommt die Reaktion zum Stillstand, auch ohne dass die Zink(II)-Amidin-Komplex-Katalysatoren D) chemisch abgestoppt werden müssten. Gegebenenfalls können die Katalysatoren D) aber auch mit Hilfe geeigneter Katalysatorgifte deaktiviert werden. Geeignete Katalysatorgifte sind beispielsweise anorganische Säuren wie Salzsäure, phosphorige Säure oder Phosphorsäure, Säurechloride wie Acetylchlorid, Benzoylchlorid oder Isophthaloyldichlorid, Sulfonsäuren und Sulfonsäureester, wie Methansulfonsäure, p-Toluolsulfonsäure, Trifluormethansulfonsäure, Perfluorbutansulfonsäure, p-Toluolsulfonsäuremethylester und -ethylester, Mono- und Dialkylphosphate wie Monotridecylphosphat, Dibutylphosphat und Dioctylphosphat, aber auch silylierte Säuren, wie Methansulfonsäuretrimethylsilylester, Trifluormethansulfonsäuretrimethylsilylester, Phosphorsäure-tris-(trimethylsilylester) und Phosphorsäurediethylester-trimethylsilylester.

Die gegebenenfalls zur Deaktivierung benötigte Menge des Katalysatorgiftes richtet sich dabei nach der Menge des verwendeten Katalysators D). Falls überhaupt kommen 0,1 bis 2,0, vorzugsweise 0,4 bis 1,6, besonders bevorzugt 0,8 bis 1,2 Äquivalente und ganz besonders bevorzugt eine äquivalente Menge des Abstoppers, bezogen auf die Menge an eingesetztem Katalysator D) zum Einsatz.

Das erfindungsgemäße Verfahren liefert bereits bei niedrigen Temperaturen innerhalb kurzer Reaktionszeiten völlig klare, praktisch farblose Iminooxadiazin- und Uretdionstrukturen enthaltende hydrophile Polyisocyanate, die selbst bei längerer Lagerung und niedrigen Temperaturen nicht zur Trübung neigen. Beim erfindungsgemäßen Verfahren verbleiben die eingesetzten Katalysatoren D) in den Iminooxadiazin- und Uretdionstrukturen enthaltenden hydrophilen Polyisocyanaten. Daher sind ein weiterer Gegenstand der Erfindung hydrophil modifizierte Polyisocyanate, erhältlich oder hergestellt nach dem erfindungsgemäßen Verfahren. Nebenreaktionen, wie die Uretdionspaltung finden nicht statt. Die Gehalte an monomeren Diisocyanaten liegen in der Regel niedriger als die der als Ausgangsverbindung eingesetzten Polyisocyanate A). Auch Trimerisierungs- oder Allophanatisierungsreaktionen, die zu einem Molekulargewichtsaufbau führen würden, werden nicht beobachtet. Die Viskositäten der erfindungsgemäßen Verfahrensprodukte liegen in der Regel nur geringfügig höher als die der Ausgangspolyisocyanate A).

Ebenfalls Gegenstand der Erfindung sind hydrophile Polyisocyanate, mit
a) einem Gehalt an monomeren Diisocyanaten von weniger als 0,5 Gew.-%, bevorzugt von weniger als 0,3 Gew.-% und besonders bevorzugt von weniger als 0,25 Gew.-%,
b) einem Gehalt an Iminooxadiazindionstrukturen von mindestens 8 mol-%, bevorzugt von 10 bis 70 mol-% und besonders bevorzugt von 20 bis 60 mol-%, jeweils bezogen auf die Gesamtmenge aller im Polyisocyanat vorliegenden Iminooxadiazindion-, Uretdion-, gegebenenfalls Isocyanurat-, Allophanat-, Biuret-, Urethan- und/oder Oxadiazintrionstrukturen,
c) einem Gehalt an Uretdionstrukturen von mindestens 1 mol-%, bevorzugt mindestens 3 mol-%, besonders bevorzugt von 5 bis 60 mol-% und ganz besonders bevorzugt von 5 bis 30 mol-%, jeweils bezogen auf die Gesamtmenge aller im Polyisocyanat vorliegenden Iminooxadiazindion-, Uretdion-, gegebenenfalls Isocyanurat-, Allophanat-, Biuret-, Urethan- und/oder Oxadiazintrionstrukturen,
d) einem Zink-Gehalt von 0,0001 bis 0,4 Gew,-%, vorzugsweise von 0,0005 bis 0,3 Gew.-% und besonders bevorzugt von 0,001 bis 0,1 Gew.-%.

Eine weitere bevorzugte Ausführungsform der Erfindung sind hydrophile Polyisocyanate, mit
a) einem Gehalt an monomeren Diisocyanaten von weniger als 0,25 Gew.-%,
b) einem Gehalt an Iminooxadiazindionstrukturen von 10 bis 70 mol-% und besonders bevorzugt von 20 bis 60 mol-%, jeweils bezogen auf die Gesamtmenge aller im Polyisocyanat vorliegenden Iminooxadiazindion-, Uretdion-, gegebenenfalls Isocyanurat-, Allophanat-, Biuret-, Urethan- und/oder Oxadiazintrionstrukturen,
c) einem Gehalt an Uretdionstrukturen von mindestens 3 mol-%, besonders bevorzugt von 5 bis 60 mol-% und ganz besonders bevorzugt von 5 bis 30 mol-%, jeweils bezogen auf die Gesamtmenge aller im Polyisocyanat vorliegenden Iminooxadiazindion-, Uretdion-, gegebenenfalls Isocyanurat-, Allophanat-, Biuret-, Urethan- und/oder Oxadiazintrionstrukturen,
d) einem Zink-Gehalt von 0,0001 bis 0,4 Gew,-%, vorzugsweise von 0,0005 bis 0,3 Gew.-% und besonders bevorzugt von 0,001 bis 0,1 Gew.-%.

Eine weitere bevorzugte Ausführungsform der Erfindung sind hydrophile Polyisocyanate, mit
a) einem Gehalt an monomeren Diisocyanaten von weniger als 0,5 Gew.-%, bevorzugt von weniger als 0,3 Gew.-% und besonders bevorzugt von weniger als 0,25 Gew.-%,
b) einem Gehalt an Iminooxadiazindionstrukturen von mindestens 8 mol-%, bevorzugt von 10 bis 70 mol-% und besonders bevorzugt von 20 bis 60 mol-%, jeweils bezogen auf die Gesamtmenge aller im Polyisocyanat vorliegenden Iminooxadiazindion-, Uretdion-, gegebenenfalls Isocyanurat-, Allophanat-, Biuret-, Urethan- und/oder Oxadiazintrionstrukturen,
c) einem Gehalt an Uretdionstrukturen von mindestens 1 mol-%, bevorzugt mindestens 3 mol-%, besonders bevorzugt von 5 bis 60 mol-% und ganz besonders bevorzugt von 5 bis 30 mol-%, jeweils bezogen auf die Gesamtmenge aller im Polyisocyanat vorliegenden Iminooxadiazindion-, Uretdion-, gegebenenfalls Isocyanurat-, Allophanat-, Biuret-, Urethan- und/oder Oxadiazintrionstrukturen,
d) einem Zink-Gehalt von 0,0001 bis 0,4 Gew,-%, vorzugsweise von 0,0005 bis 0,3 Gew.-% und besonders bevorzugt von 0,001 bis 0,1 Gew.-%,
erhältlich oder hergestellt durch wenigstens eine Umsetzung von mindestens einer Polyisocyanatkomponente A) auf Basis von PDI, HDI, IPDI und/oder 2,4'- und 4,4'-Diisocyanatodicyclohexylmethan, die mindestens Iminooxadiazindion- und Uretdionstrukturen enthält, mit mindestens einer nichtionisch hydrophilen organischen Verbindung B), die mindestens eine gegenüber Isocyanaten reaktive Gruppe aufweist.

Eine weitere bevorzugte Ausführungsform der Erfindung sind hydrophile Polyisocyanate, mit
a) einem Gehalt an monomeren Diisocyanaten von weniger als 0,5 Gew.-%, bevorzugt von weniger als 0,3 Gew.-% und besonders bevorzugt von weniger als 0,25 Gew.-%,
b) einem Gehalt an Iminooxadiazindionstrukturen von mindestens 8 mol-%, bevorzugt von 10 bis 70 mol-% und besonders bevorzugt von 20 bis 60 mol-%, jeweils bezogen auf die Gesamtmenge aller im Polyisocyanat vorliegenden Iminooxadiazindion-, Uretdion-, gegebenenfalls Isocyanurat-, Allophanat-, Biuret-, Urethan- und/oder Oxadiazintrionstrukturen,
c) einem Gehalt an Uretdionstrukturen von mindestens 1 mol-%, bevorzugt mindestens 3 mol-%, besonders bevorzugt von 5 bis 60 mol-% und ganz besonders bevorzugt von 5 bis 30 mol-%, jeweils bezogen auf die Gesamtmenge aller im Polyisocyanat vorliegenden Iminooxadiazindion-, Uretdion-, gegebenenfalls Isocyanurat-, Allophanat-, Biuret-, Urethan- und/oder Oxadiazintrionstrukturen,
d) einem Zink-Gehalt von 0,0001 bis 0,4 Gew,-%, vorzugsweise von 0,0005 bis 0,3 Gew.-% und besonders bevorzugt von 0,001 bis 0,1 Gew.-%, die
eine mittlere NCO-Funktionalität von 1,8 bis 4,8, vorzugsweise von 2,0 bis 4,2, sowie einen Gehalt an Isocyanatgruppen von 5,0 bis 24,0 Gew.-%, vorzugsweise von 6,0 bis 23,0 Gew.-%, besonders bevorzugt 9,0 bis 22,0 Gew.-% aufweisen.

Bevorzugt weisen die erfindungsgemäßen hydrophilen Polyisocyanate sowie die weiteren Ausführungsformen dieser Polyisocyanate weiterhin e) einen Amidin-Gehalt von 0,0001 bis 1,9 Gew,-%, vorzugsweise von 0,0003 bis 1,2 Gew.-% und besonders bevorzugt von 0,001 bis 1,0 Gew.-%, auf.

Die vorstehend genannten Gehalte a) an monomeren Diisocyanaten werden nach DIN EN ISO 10283:2007-11 gaschromatographisch mit internem Standard bestimmt

Die vorstehend genannten Gehalte b) und c) an Iminooxadiazindion-, Uretdion-, gegebenenfalls Isocyanurat-, Allophanat-, Biuret-, Urethan- und/oder Oxadiazintrionstrukturen werden in aus den Integralen protonenentkoppelter ¹³C-NMR-Spektren (aufgenommen an einem Gerät Bruker DPX-400) errechnet und beziehen sich jeweils auf die Summe an vorliegenden Uretdion-, Isocyanurat-, Allophanat-, Biuret-, Iminooxadiazindion- und/oder Oxadiazintrionstrukturen. Im Falle von in CDCl₃ gelösten HDI-Polyisocyanaten weisen die einzelnen Strukturelemente folgende chemische Verschiebungen (in ppm) auf: Iminooxadiazindion: 147.8, 144.3 und 135.3; Uretdion: 157.1; Isocyanurat: 148.4; Allophanat: 155.7 und 153.8, Biuret: 155,5; Urethan: 156,3; Oxadiazintrion: 147,8 und 143,9.

Die vorstehend genannten Gehalte d) an Zink werden durch induktiv gekoppelte Plasma-Atom-Emissionsspektrometrie (ICP-OES) nach DIN EN ISO 11885:2009-09 nach Mikrowellenaufschluss bestimmt. Die Nachweisgrenze für Zink liegt bei diesem Verfahren bei <1 ppm.

Die vorstehend genannten Gehalte e) an Amidin können durch Gaschromatographie oder Flüssigkeitschromatographie jeweils mit Massenspektrometrie-Kopplung (GC/MS bzw. LC/MS) bestimmt werden.

Gegebenenfalls können den nach dem erfindungsgemäßen Verfahren hergestellten hydrophil modifizierten Polyisocyanaten vor der Emulgierung noch weitere nichthydrophilierte Polyisocyanate mit aliphatisch, cycloaliphatisch, araliphatisch und/oder aromatisch gebundenen Isocyanatgruppen, insbesondere Lackpolyisocyanate der obengenannten Art, zugesetzt werden. In solchen Mischungen übernehmen die erfindungsgemäßen Verfahrensprodukte die Funktion eines Emulgators für den nachträglich zugemischten Anteil an nichthydrophilen Polyisocyanaten.

Ein weiterer Gegenstand der Erfindung ist die Verwendung der erfindungsgemäßen nichtionisch hydrophil modifizierten Polyisocyanate Ausgangskomponente bei der Herstellung von Polyurethankunststoffen. Die erfindungsgemäßen nichtionisch hydrophilierten, Iminooxadiazindion- und Uretdionstrukturen enthaltenden Polyisocyanate stellen wertvolle Ausgangsmaterialien zur Herstellung von Polyurethankunststoffen nach dem Isocyanat-Polyadditionsverfahren dar.

Hierzu werden die hydrophil modifizierten Polyisocyanate vorzugsweise in Form wäßriger Emulsionen eingesetzt, die in Kombination mit in Wasser dispergierten Polyhydroxylverbindungen im Sinne von wäßrigen Zweikomponenten-Systemen zur Umsetzung gebracht werden können.

Besonders bevorzugt werden die erfindungsgemäßen nichtionisch hydrophil modifizierten Polyisocyanatgemische als Vernetzer für in Wasser gelöste oder dispergierte Lackbindemittel oder Lackbindemittelkomponenten mit gegenüber Isocyanatgruppen reaktionsfähigen Gruppen, insbesondere alkoholischen Hydroxylgruppen, bei der Herstellung von Beschichtungen unter Verwendung von wäßrigen Beschichtungsmitteln auf Basis derartiger Bindemittel bzw. Bindemittelkomponenten verwendet. Die Vereinigung des Vernetzers, gegebenenfalls in emulgierter Form, mit den Bindemitteln bzw. Bindemittelkomponenten kann hierbei durch einfaches Verrühren vor der Verarbeitung der Beschichtungsmittel nach beliebigen Methoden oder auch unter Verwendung von Zweikomponenten-Spritzpistolen erfolgen.

In diesem Zusammenhang seien als Lackbindemittel oder Lackbindemittelkomponenten beispielhaft erwähnt: in Wasser gelöste oder dispergierte, Hydroxylgruppen aufweisende Polyacrylate, insbesondere solche des Molekulargewichtsbereichs 1.000 bis 20.000, die mit organischen Polyisocyanaten als Vernetzer wertvolle Zweikomponenten-Bindemittel darstellen oder in Wasser dispergierte, gegebenenfalls Urethan-modifizierte, Hydroxylgruppen aufweisende Polyesterharze der aus der Polyester- und Alkydharzchemie bekannten Art. Prinzipiell sind als Reaktionspartner für die erfindungsgemäßen Polyisocyanatgemische alle in Wasser gelösten oder dispergierten Bindemittel, die gegenüber Isocyanaten reaktive Gruppen aufweisen, geeignet. Hierzu zählen beispielsweise auch in Wasser dispergierte Polyurethane oder Polyharnstoffe, die aufgrund der in den Urethan- bzw. Harnstoffgruppen vorliegenden aktiven Wasserstoffatome mit Polyisocyanaten vernetzbar sind.

Ein weiterer Gegenstand der vorliegenden Erfindung ist ein Beschichtungsmittel enthaltend mindestens ein erfindungsgemäßes nichtionisch hydrophiliertes, Iminooxadiazindion- und Uretdionstrukturen enthaltendes Polyisocyanat.

Bei der erfindungsgemäßen Verwendung als Vernetzerkomponente für wäßrige Lackbindemittel werden die erfindungsgemäßen nichtionisch hydrophilierten Polyisocyanate im allgemeinen in solchen Mengen eingesetzt, die einem Äquivalentverhältnis von NCO-Gruppen zu gegenüber NCO-Gruppen reaktionsfähigen Gruppen, insbesondere alkoholischen Hydroxylgruppen, von 0,5 : 1 bis 2 : 1 entsprechen.

Gegebenenfalls können die erfindungsgemäßen nichtionisch hydrophilierten Polyisocyanate in untergeordneten Mengen auch nichtfunktionellen wäßrigen Lackbindemitteln zur Erzielung ganz spezieller Eigenschaften, beispielsweise als Additiv zur Haftverbesserung zugemischt werden.

Selbstverständlich können die erfindungsgemäßen Polyisocyanate auch in mit aus der Polyurethanchemie an sich bekannten Blockierungsmitteln blockierter Form in Kombination mit den obengenannten wäßrigen Lackbindemitteln oder Lackbindemittelkomponenten im Sinne von wäßrigen Einkomponenten-PUR-Einbrennsystemen eingesetzt werden. Geeignete Blockierungsmittel sind beispielsweise Malonsäurediethylester, Acetessigester, Acetonoxim, Butanonoxim, ε-Caprolactam, 3,5-Dimethylpyrazol, 1,2,4-Triazol, Dimethyl-1,2,4-triazol, Imidazol oder beliebige Gemische dieser Blockierungsmittel.

Als Untergründe für die mit Hilfe der erfindungsgemäßen nichtionisch hydrophilierten Polyisocyanate formulierten wäßrigen Beschichtungen kommen beliebige Substrate in Betracht, wie z. B. Metall, Holz, Glas, Stein, keramische Materialien, Beton, harte und flexible Kunststoffe, Textilien, Leder und Papier, die vor der Beschichtung gegebenenfalls auch mit üblichen Grundierungen versehen werden können.

Im Allgemeinen besitzen die mit den erfindungsgemäßen nichtionisch hydrophilierten Polyisocyanaten formulierten wäßrigen Beschichtungsmittel, denen gegebenenfalls die auf dem Lacksektor üblichen Hilfs- und Zusatzmittel, wie z. B. Verlaufshilfsmittel, Farbpigmente, Füllstoffe, Mattierungsmittel oder Emulgatoren, einverleibt werden können, schon bei Raumtemperaturtrocknung gute lacktechnische Eigenschaften.

Selbstverständlich lassen sie sich jedoch auch unter forcierten Bedingungen bei erhöhter Temperatur bzw. durch Einbrennen bei Temperaturen bis 260 °C trocknen.

Ein weiterer Gegenstand der vorliegenden Erfindung ist ein Substrat, beschichtet mit einem gegebenenfalls unter Wärmeeinwirkung ausgehärteten erfindungsgemäßen Beschichtungsmittel.

Aufgrund ihrer hervorragenden Wasseremulgierbarkeit, die eine homogene, besonders feinteilige Verteilung in wäßrigen Lackbindemitteln ermöglicht, führt die Verwendung der erfindungsgemäßen nichtionisch hydrophilierten Polyisocyanate als Vernetzerkomponente für wäßrige Polyurethanlacke zu Beschichtungen mit hervorragenden optischen Eigenschaften, insbesondere hohem Oberflächenglanz, Verlauf und hoher Transparenz.

Neben der bevorzugten Verwendung als Vernetzerkomponenten für wäßrige 2K-PUR-Lacke eignen sich die erfindungsgemäßen nichtionisch hydrophilierten Polyisocyanate hervorragend als Vernetzer für wäßrige Dispersionsklebstoffe, Leder- und Textilbeschichtungen oder Textildruckpasten, als als Papierhilfsmittel, die frei von Adsorbierbaren Organisch gebundenen Halogenen (AOX) sind, oder auch als Zusatzmittel für mineralische Baustoffe, beispielsweise Beton- oder Mörtelmassen.

Die für das erfindungsgemäße Verfahren als bevorzugt gekennzeichneten Merkmale sind auch für die weiteren Erfindungsgegenstände bevorzugt.

Die nachfolgenden Beispiele dienen zur Verdeutlichung der vorliegenden Erfindung, sollen aber keinesfalls als Einschränkung des Schutzbereichs verstanden werden.

### Beispiele

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909:2007-05.

Sämtliche Viskositätsmessungen erfolgten mit einem Physica MCR 51 Rheometer der Fa. Anton Paar Germany GmbH (DE) nach DIN EN ISO 3219:1994-10 bei einer Scherrate von 250 s⁻¹.

Die Restmonomerengehalte wurden nach DIN EN ISO 10283:2007-11 gaschromatographisch mit internem Standard gemessen.

Die Messung der Platin-Cobalt-Farbzahl erfolgte spektrofotometrisch nach DIN EN ISO 6271-2:2005-03 mit einem LICO 400-Spektrofotometer der Fa. Lange, DE.

Die Gehalte (mol-%) der in den Polyisocyanaten A) vorliegenden Iminooxadiazindion-, Uretdion-, gegebenenfalls Isocyanurat-, Allophanat-, Biuret-, Urethan- und/oder Oxadiazintrionstrukturen wurden aus den Integralen protonenentkoppelter ¹³C-NMR-Spektren (aufgenommen an einem Gerät Bruker DPX-400) errechnet und beziehen sich jeweils auf die Summe an vorliegenden Uretdion-, Isocyanurat-, Allophanat-, Biuret-, Iminooxadiazindion- und/oder Oxadiazintrionstrukturen. Im Falle von in CDCl₃ gelösten HDI-Polyisocyanaten weisen die einzelnen Strukturelemente folgende chemische Verschiebungen (in ppm) auf: Iminooxadiazindion: 147.8, 144.3 und 135.3; Uretdion: 157.1; Isocyanurat: 148.4; Allophanat: 155.7 und 153.8, Biuret: 155,5; Urethan: 156,3; Oxadiazintrion: 147,8 und 143,9.

### Ausaanasverbindunaen

### Polvisocvanate A)

### Ausgangspolyisocyanat A1)

Polyisocyanat, hergestellt in Anlehnung an Beispiel 4 der EP-A 0 962 455, durch Trimeriserung von HDI unter Verwendung einer 50 %-igen Lösung von Tetrabutylphosphoniumhydrogendifluorid in Isopropanol/Methanol (2 : 1) als Katalysator, Reaktionsstoppung bei einem NCO-Gehalt der Rohmischung von 43 % durch Zugabe von Dibutylphosphat und anschließende Abtrennung des nicht umgesetzten HDI durch Dünnschichtdestillation bei einer Temperatur von 130 °C und einem Druck von 0,2 mbar.

Das Produkt wies folgende Kenndaten und Zusammensetzung auf:

| | |
|---|---|
| NCO-Gehalt: | 23,4 % |
| monomeres HDI: | 0,11 % |
| Viskosität (23 °C): | 720 mPas |
| Farbzahl (Hazen): | 11 |
| Iminooxadazindionstrukturen: | 40,8 mol-% |
| Uretdionstrukturen: | 4,9 mol-% |
| Isocyanuratstrukturen: | 54,3 mol-% |

### Ausgangspolyisocyanat A2)

Polyisocyanat, hergestellt durch Tri-butylphosphin-katalysierte Oligomerisierung von HDI nach Beispiel 1a) der EP-A 0 377 177.

Das Produkt wies folgende Kenndaten und Zusammensetzung auf:

| | |
|---|---|
| NCO-Gehalt: | 21,8% |
| monomeres HDI: | 0,21 % |
| Viskosität (23 °C): | 170 mPas |
| Farbzahl (Hazen): | 8 |
| Iminooxadazindionstrukturen: | 10,5 mol-% |
| Uretdionstrukturen: | 58,4 mol-% |
| Isocyanuratstrukturen: | 17,3 mol-% |
| Allophanatstrukturen: | 13,8 mol-% |

### Ausgangspolyisocyanat A3)

Polyisocyanat, hergestellt durch katalytische Trimerisierung von HDI in Anlehnung an Beispiel 11 der EP-A 330 966, mit der Änderung, dass die Reaktion bei einem NCO-Gehalt der Rohmischung von 40 % durch Zugabe von Dibutylphosphat gestoppt wurde. Anschließend wurde nicht umgesetztes HDI durch Dünnschichtdestillation bei einer Temperatur von 130°C und einem Druck von 0,2 mbar abgetrennt.

Das Produkt wies folgende Kenndaten und Zusammensetzung auf:

| | |
|---|---|
| NCO-Gehalt: | 21,7% |
| monomeres HDI: | 0,06% |
| Viskosität (23 °C): | 3080 mPas |
| Farbzahl (Hazen): | 8 |
| Iminooxadazindionstrukturen: | 3,6 mol-% |
| Uretdionstrukturen: | 0,9 mol-% |
| Isocyanuratstrukturen: | 90,1 mol-% |
| Allophanatstrukturen: | 5,4 mol-% |

### Nichtionisch hydrophile organische Verbindung B)

**B1)** Methoxypolyethylenglykol MPEG 350 (Ineos Oxide, Köln, DE),
   OH-Zahl: 162 mg KOH/g, Äquivalentgewicht: 346 g/mol
**B2)** Methoxypolyethylenglykol MPEG 500 (Ineos Oxide, Köln, DE),
   OH-Zahl: 112 mg KOH/g, Äquivalentgewicht: 501 g/mol

### Katalysator D)

**D1)** Zn(1-Methylimidazol)₂(2-ethylhexanoat)₂, hergestellt nach dem in WO 2006/022899 für den Beispielkatalysator 9 beschriebenen Verfahren.
**D2)** Zn(DBU)₂(2-ethylhexanoat)₂, hergestellt nach dem in WO 2006/022899 für den Beispielkatalysator 6 beschriebenen Verfahren.

### Beispiel 1 (erfindungsgemäß)

900 g (5,01 val) der Polyisocyanatkomponente A1) wurden bei 60 °C unter trockenem Stickstoff und Rühren gemeinsam mit 0,05 g (50 ppm) Katalysator D1) vorgelegt, innerhalb von 30 min mit 100 g (0,29 val) der nichtionisch hydrophilen organischen Verbindung B1) versetzt und bei dieser Temperatur weiter gerührt, bis der NCO-Gehalt der Mischung nach etwa 2 h auf den einer vollständigen Urethanisierung entsprechenden Wert gefallen war. Nach Abkühlen auf Raumtemperatur lag ein farbloses, völlig klares, hydrophil modifiziertes Polyisocyanat mit folgenden Kenndaten vor:

| | |
|---|---|
| NCO-Gehalt: | 19,8% |
| monomeres HDI: | 0,10% |
| Viskosität (23 °C): | 870 mPas |
| Farbzahl (Hazen): | 5 |

### Beispiel 2 (erfindungsgemäß)

850 g (4,41 val) der Polyisocyanatkomponente A2) wurden bei 60 °C unter trockenem Stickstoff und Rühren gemeinsam mit 0,05 g (50 ppm) Katalysator D1) vorgelegt, innerhalb von 30 min mit 150 g (0,30 val) der nichtionisch hydrophilen organischen Verbindung B2) versetzt und bei dieser Temperatur weiter gerührt, bis der NCO-Gehalt der Mischung nach etwa 2:30 h auf den einer vollständigen Urethanisierung entsprechenden Wert gefallen war. Nach Abkühlen auf Raumtemperatur lag ein farbloses, völlig klares, hydrophil modifiziertes Polyisocyanat mit folgenden Kenndaten vor:

| | |
|---|---|
| NCO-Gehalt: | 17,2 % |
| monomeres HDI: | 0,18 % |
| Viskosität (23 °C): | 240 mPas |
| Farbzahl (Hazen): | 10 |

### Beispiel 3 (erfindungsgemäß)

900 g (5,01 val) der Polyisocyanatkomponente A1) wurden bei 60 °C unter trockenem Stickstoff und Rühren gemeinsam mit 0,05 g (50 ppm) Katalysator D2) vorgelegt, innerhalb von 30 min mit 100 g (0,29 val) der nichtionisch hydrophilen organischen Verbindung B1) versetzt und bei dieser Temperatur weiter gerührt, bis der NCO-Gehalt der Mischung nach etwa 2 h auf den einer vollständigen Urethanisierung entsprechenden Wert gefallen war. Nach Abkühlen auf Raumtemperatur lag ein farbloses, völlig klares, hydrophil modifiziertes Polyisocyanat mit folgenden Kenndaten vor:

| | |
|---|---|
| NCO-Gehalt: | 19,8% |
| monomeres HDI: | 0,10% |
| Viskosität (23 °C): | 865 mPas |
| Farbzahl (Hazen): | 12 |

### Beispiel 4 (Vergleich, unkatalysiert)

900 g (5,01 val) der Polyisocyanatkomponente A1) wurden bei 100 °C unter trockenem Stickstoff und Rühren vorgelegt, innerhalb von 30 min mit 100 g (0,29 val) der nichtionisch hydrophilen organischen Verbindung B1) versetzt und bei dieser Temperatur weiter gerührt, bis der NCO-Gehalt der Mischung nach etwa 2,5 h auf den einer vollständigen Urethanisierung entsprechenden Wert gefallen war. Nach Abkühlen auf Raumtemperatur lag ein farbloses, völlig klares, hydrophil modifiziertes Polyisocyanat mit folgenden Kenndaten vor:

| | |
|---|---|
| NCO-Gehalt: | 19,8% |
| monomeres HDI: | 0,29% |
| Viskosität (23 °C): | 920 mPas |
| Farbzahl (Hazen): | 13 |

Die Beispiele 1, 2 und 3 zeigen, dass sich die Ausgangspolyisocyanate A1) und A2), die Iminooxadiazindion- und Uretdionstrukturen im für das erfindungsgemäße Verfahren beanspruchten Bereich enthalten, bei 60 °C in kurzer Reaktionszeit zu klaren, nichtionisch hydrophilierten Polyisocyanate abreagieren, ohne dass dabei Uretdionspaltung zu monomeren Diisocyanaten oder ein Viskositätsanstieg aufgrund unerwünschter Nebenreaktionen eintritt. Vergleichsbeispiel 4 zeigt, dass die unkatalysiert Umsetzung des Ausgangspolyisocyanats A1) mit dem Polyetheralkohol B1) bei 100 °C zu einem hydrophilen Polyisocyanat mit sehr hohem Monomergehalt führt.

### Beispiele 5 bis 9 (Vergleich)

Nach dem in Beispiel 1 beschriebenen Verfahren wurden jeweils 900 g einer Polyisocyanatkomponente A) in Gegenwart von jeweils 50 ppm unterschiedlicher Katalysatoren bei 60 °C mit 100 g der nichtionisch hydrophilen organischen Verbindung B1) umgesetzt. Die nachfolgende Tabelle zeigt das jeweils eingesetzte Polyisocyanat, Katalysatoren, Reaktionszeiten bis zum Erreichen des einer vollständigen Urethanisierung entsprechenden NCO-Gehaltes sowie die Kenndaten der erhaltenen Reaktionsprodukte.

| **Beispiel** | | **5 Vergleich** | **6 Vergleich** | **7 Vergleich** | **8 Vergleich** | **9 Vergleich** |
|---|---|---|---|---|---|---|
| Ausgangspolyisocyanat | | A1) | A1) | A1) | A1) | A1) |
| Katalysator | | ohne | Zr-octoat | Bi-neodecanoat | Bi-octoat | DABCO |
| Reaktionszeit bei 60 °C | [h] | 11:30 | 2:00 | 1:05 | 0:45 | 4:45 |
| NCO-Gehalt: | [%] | 19,8 | 19,5 | 19,8 | 19,7 | 19,8 |
| monomeres HDI: | [%] | 0,12 | 0,09 | 0,10 | 0,10 | 0,22 |
| Viskosität (23 °C): | [mPas] | 850 | 1210 | 890 | 870 | 880 |
| Farbzahl (Hazen): | | 7 | 8 | 15 | 12 | 17 |
| Optische Beurteilung: | | klar | klar | trübe, schaumig | trübe, schaumig | klar, gelblich |

Beispiel 5 zeigt, dass die unkatalysierte Umsetzung von Polyisocyanat A1) bei 60 °C eine sehr lange Reaktionszeit erfordert. Das Beispiel 6 zeigt, dass die Verwendung von Zirkonium-Katalyse aufgrund von Nebenreaktionen zu einem deutlichen Viskositätsanstieg führt. Die Beispiele 7 und 8 zeigen, dass die Urethanisierung unter Bismuth-Katalyse zwar innerhalb kurzer Zeiten abläuft und auch keine Nebenreaktionen wie Uretdionspaltung (Monomeranstieg) oder Trimerisierung (Viskositätsanstieg) stattfinden, wobei allerdings in beiden Fällen stark trübe, schaumige Produkte erhalten werden. Beispiel 9 zeigt, dass die aminische Katalyse mit DABCO zu einer erheblichen Rückspaltung von Uretdionstrukturen und Anstieg des Gehalts an monomerem HDI führt.

### Beispiel 10 (erfindungsgemäß)

900 g (5,01 val) der Polyisocyanatkomponente A1) wurden bei 60 °C unter trockenem Stickstoff und Rühren gemeinsam mit 0,1 g (100 ppm) Katalysator D1) vorgelegt, innerhalb von 30 min mit 100 g (0,29 val) der nichtionisch hydrophilen organischen Verbindung B1) versetzt und bei dieser Temperatur weiter gerührt, bis der NCO-Gehalt der Mischung nach 1:30 h auf den einer vollständigen Urethanisierung entsprechenden Wert gefallen war. Anschließend wurde der Katalysator durch Zugabe von 0,1 g (100 ppm) Dibutylphosphat und 30 minütiges Nachrühren bei 60°C deaktiviert. Nach Abkühlen auf Raumtemperatur lag ein farbloses, völlig klares, hydrophil modifiziertes Polyisocyanat mit folgenden Kenndaten vor:

| | |
|---|---|
| NCO-Gehalt: | 19,8 % |
| monomeres HDI: | 0,10 % |
| Viskosität (23 °C): | 880 mPas |
| Farbzahl (Hazen): | 6 |

Das so erhaltene Polyisocyanat wurde 14 Tage bei 50 °C gelagert. Anschließend wurden die Kenndaten erneut bestimmt. Während NCO- und Monomergehalt unverändert waren, war die Viskosität geringfügig auf 890 mPas und die Farbzahl auf 9 angestiegen. Der Versuch belegt die völlige Lagerstabilität der erfindungsgemäßen hydrophil modifizierten Polyisocyanate.

## Patentansprüche

1. Verfahren zur Herstellung hydrophil modifizierter Polyisocyanate, umfassend eine Umsetzung von
A) mindestens einer Polyisocyanatkomponente, die mindestens Iminooxadiazindion- und Uretdionstrukturen aufweist, mit
B) mindestens einer nichtionisch hydrophilen organischen Verbindung, die mindestens eine gegenüber Isocyanaten reaktive Gruppe aufweist, und gegebenenfalls
C) mindestens einer hydrophoben Verbindungen, die mindestens eine gegenüber Isocyanaten reaktive Gruppe aufweist, in Gegenwart
D) mindestens eines durch Umsetzung von Zink(II)carboxylaten mit Amidinbasen erhältlichen Zink(II)-Amidin-Komplexes der allgemeinen Formel (I)
[Zn(Amidin)₂(Carboxylat)_{2]} (I)
als Katalysator.

2. Verfahren gemäß Anspruch 1, **dadurch gekennzeichnet, dass** die Polyisocyanatkomponente A) einen Gehalt an Iminooxadiazindionstrukturen von mindestens 8 mol-%, vorzugsweise von von 10 bis 70 mol-%, und einen Gehalt an Uretdionstrukturen von mindestens 1 mol-%, bevorzugt von mindestens 3 mol-% und besonders bevorzugt von 5 bis 60 mol-%, jeweils bezogen auf die Gesamtmenge aller im Polyisocyanat vorliegenden Iminooxadiazindion-, Uretdion-, gegebenenfalls Isocyanurat-, Allophanat-, Biuret-, Urethan- und/oder Oxadiazintrionstrukturen aufweist.

3. Verfahren gemäß einem der Ansprüche 1 und 2, **dadurch gekennzeichnet, dass** es sich bei der Polyisocyanatkomponente A) um solche mit ausschließlich aliphatisch und/oder cycloaliphatisch gebundenen Isocyanatgruppen, bevorzugt um solche auf Basis von PDI, HDI, IPDI und/oder 2,4'- und 4,4'-Diisocyanatodicyclohexylmethan handelt.

4. Verfahren gemäß einem der Ansprüche 1 bis 3, **dadurch gekennzeichnet, dass** es sich bei der nichtionisch hydrophilen organischen Verbindung B) um ein- oder mehrwertige, im statistischen Mittel 5 bis 50 Ethylenoxideinheiten pro Molekül aufweisende Polyalkylenoxidpolyetheralkohole handelt, bevorzugt um reine Polyethylenoxidpolyetheralkohole oder gemischte Polyalkylenoxidpolyetheralkohole handelt, deren Alkylenoxideinheiten zu mindestens 70 mol-% aus Ethylenoxideinheiten bestehen.

5. Verfahren gemäß einem der Ansprüche 1 bis 4, **dadurch gekennzeichnet, dass** die nichtionisch hydrophilen Verbindungen B) in einer Menge von bis zu 30 Gew.-%, vorzugsweise von 2 bis zu 25 Gew.-%, besonders bevorzugt von 5 bis zu 20 Gew.-%, bezogen auf die Menge an Polyisocyanat A) zum Einsatz kommen.

6. Verfahren gemäß einem der Ansprüche 1 bis 5, **dadurch gekennzeichnet, dass** es sich bei den Katalysatoren D) um Zink(II)-Amidin-Komplexe der allgemeinen Formel (I) handelt, die unter Verwendung von Zinksalzen gesättigter oder ungesättigter, aliphatischer, cycloaliphatischer und/oder aromatischer Carbonsäuren mit bis zu 30 Kohlenstoffatomen als Zink(II)carboxylate erhältlich sind.

7. Verfahren gemäß einem der Ansprüche 1 bis 6, **dadurch gekennzeichnet, dass** es sich bei den Katalysatoren D) um Zink(II)-Amidin-Komplexe der allgemeinen Formel (I) handelt, die unter Verwendung von Amidinbasen der allgemeinen Formel (II) 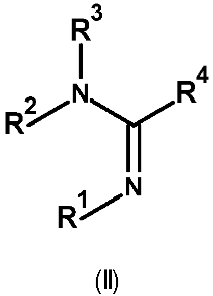 erhältlich sind, in welcher die Reste
R¹ bis R⁴ unabhängig voneinander für gleiche oder verschiedene Reste stehen, die Wasserstoff, gesättigte oder ungesättigte, lineare oder verzweigte, aliphatische, cycloaliphatische, araliphatische oder aromatische organische Reste mit 1 bis 18, vorzugsweise 1 bis 12 Kohlenstoffatomen, die substituiert oder unsubstituiert sind und/oder Heteroatome in der Kette aufweisen, stehen, wobei die Reste auch in Kombination untereinander gegebenenfalls gemeinsam mit einem weiteren Heteroatom Ringe mit 3 bis 12 Kohlenstoffatomen bilden können, die gegebenenfalls weiter substituiert sein können, und wobei
R⁴ auch die Bedeutung eines Restes 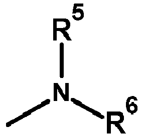 haben kann, in dem die Reste R⁵ und R⁶ die vorstehend für die Reste R¹ bis R⁴ genannte Bedeutung haben können.

8. Verfahren gemäß einem der Ansprüche 1 bis 7, **dadurch gekennzeichnet, dass** es sich bei den Katalysatoren D) um Zink(II)-Amidin-Komplexe der allgemeinen Formel (I) handelt, die unter Verwendung von bicyclischen, N,N,N'-trisubstituierten Amidinen der allgemeinen Formel (III) 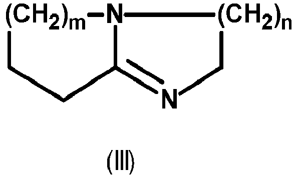 als Amidinbasen erhältlich sind, in welcher m für eine ganze Zahl von 1 bis 9, vorzugsweise von 1 bis 3, und n für eine ganze Zahl von 1 bis 3, vorzugsweise für 2, steht.

9. Verfahren gemäß einem der Ansprüche 1 bis 6, **dadurch gekennzeichnet, dass** es sich bei den Katalysatoren D) um Zink(II)-Amidin-Komplexe der allgemeinen Formel (I) handelt, die unter Verwendung von Amidinbasen der allgemeinen Formel (IV) 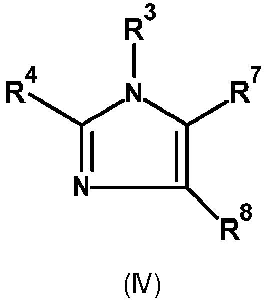 erhältlich sind, in welcher die Reste
R³, R⁴, R⁷ und R⁸ die in Anspruch 7 für R³ und R⁴ angegebene Bedeutung haben, wobei die Reste auch in Kombination untereinander gegebenenfalls gemeinsam mit einem weiteren Heteroatom Ringe mit 2 bis 8 Kohlenstoffatomen bilden können, die gegebenenfalls weiter substituiert sein können.

10. Verfahren gemäß einem der Ansprüche 1 bis 9, **dadurch gekennzeichnet, dass** es sich bei den Zink(II)-Amidin-Komplexen D) um Zn(DBN)₂(2-ethylhexanoat)₂, Zn(DBN)₂(neodecanoat)₂, Zn(DBU)₂(2-ethylhexanoat)₂, Zn(DBU)₂(neodecanoat)₂, Zn(1-Methylimidazol)₂(2-ethylhexanoat)₂, Zn(1-Methylimidazol)₂(neodecanoat)₂, Zn(1,2-Dimethylimidazol)₂(2-ethylhexanoat)₂ und/oder Zn(1,2-Dimethylimidazol)₂(neodecanoat)₂ handelt.

11. Verfahren gemäß einem der Ansprüche 1 bis 10, **dadurch gekennzeichnet, dass** die Zink(II)-Amidin-Komplexe D) in einer Menge von 0,0005 bis 3 Gew.-%, vorzugsweise von 0,001 bis 2 Gew.-%, besonders bevorzugt von 0,003 bis 1 Gew.-%, bezogen auf die Menge an Polyisocyanat A) zum Einsatz kommen.

12. Nichtionisch hydrophil modifizierte Polyisocyanate, mit
a) einem Gehalt an monomeren Diisocyanaten von weniger als 0,5 Gew.-%, bevorzugt von weniger als 0,3 Gew.-% und besonders bevorzugt von weniger als 0,25 Gew.-%,
b) einem Gehalt an Iminooxadiazindionstrukturen von mindestens 8 mol-%, bevorzugt von 10 bis 70 mol-% und besonders bevorzugt von 20 bis 60 mol-%, jeweils bezogen auf die Gesamtmenge aller im Polyisocyanat vorliegenden Iminooxadiazindion-, Uretdion-, gegebenenfalls Isocyanurat-, Allophanat-, Biuret-, Urethan- und/oder Oxadiazintrionstrukturen,
c) einem Gehalt an Uretdionstrukturen von mindestens 1 mol-%, bevorzugt von mindestens 3 mol-%, besonders bevorzugt von 5 bis 60 mol-% und ganz besonders bevorzugt von 5 bis 30 mol-%, jeweils bezogen auf die Gesamtmenge aller im Polyisocyanat vorliegenden Iminooxadiazindion-, Uretdion-, gegebenenfalls Isocyanurat-, Allophanat-, Biuret-, Urethan- und/oder Oxadiazintrionstrukturen,
d) einem Zink-Gehalt von 0,0001 bis 0,4 Gew,-%, vorzugsweise von 0,0005 bis 0,3 Gew.-% und besonders bevorzugt von 0,001 bis 0,1 Gew.-%.

13. Verwendung der nichtionisch hydrophil modifizierten Polyisocyanate gemäß Anspruch 12 als Ausgangskomponente bei der Herstellung von Polyurethankunststoffen.

14. Beschichtungsmittel enthaltend nichtionisch hydrophil modifizierte Polyisocyanate gemäß Anspruch 12.

15. Substrat, beschichtet mit einem gegebenenfalls unter Wärmeeinwirkung ausgehärteten Beschichtungsmittel gemäß Anspruch 14.
